# EUROPEAN PATENT APPLICATION

(11) **EP 4 563 851 A1**
(43) Date of publication of application: **04.06.2025**
(21) Application number: 23213381.9
(22) Date of filing: 30.11.2023
(51) Int. Cl.: F16J 15/34, F16J 15/54

(54) **MECHANICAL SEAL**

(71) Applicant: Meeuwsen, Jacob, 4435AP Baarland (NL)
(72) Inventor: Meeuwsen, Jacob, 4435AP Baarland (NL)
(74) Representative: Stoffregen, Hans-Herbert

(57) **Abstract**

The invention relates to a mechanical seal (10) comprising a rotating first seal ring (16) having a first sealing surface (18) and a stationary second seal ring (22) having a second sealing surface (20), and pressure means (24) acting on the seal rings to compress the seal rings and contact the sealing surfaces. To ensure by structurally simple means that the sealing surfaces are in contact with each other to the required extent and to ensure the possibility to fasten the mechanical seal to the roatating element or to the stationary element without special fastening means, the pressure means is a ring element (24) consisting of or containing a spring-elastic material at least in certain regions, in that the ring element has a transverse leg (26) which is formed to sealingly abut against circumferential surface of a rotating element (12), and in that the ring element has two side legs (28, 30) extending from the transverse leg between which portions of the seal rings (16, 22) extend and via which a pressure is exerted on at least one of the seal rings for contacting the sealing surfaces (18, 20).

## Description

The invention relates to a mechanical seal comprising a rotating first seal ring having a first sealing surface and a stationary second seal ring having a second sealing surface, and pressure means acting on the seal rings and contact the sealing surfaces.

End-face mechanical seals, also called as mechanical seals, are used in mechanical engineering and are employed in rotating devices such as pumps, mixers, blowers or compressors. A rotating component, such as a shaft, is sealed against a stationary component, such as a machine housing.

In known designs, the first seal or sliding ring, which is also referred to as the rotor ring, is connected to the rotating component, e.g. via locking pins. Spring elements are usually used to apply force to the rotor ring in the direction of the second sliding ring, which is also referred to as the stator ring, so that the sealing surfaces lie on each other. Special fasteners are also required to secure the stator ring to the stationary component, such as housing.

Object of the invention is the developing of a mechanical seal of the type described above in such a way that it is ensured by structurally simple means that the sealing surfaces are in contact with each other to the required extent. At the same time, it should be possible to fasten the end-face mechanical seal to the rotating element or to the stationary element without special fastening means.

To solve the problem, it is essentially provided that the pressure means is a ring element consisting of or containing a spring-elastic material at least in certain regions, that the ring element has a transverse leg which is designed to sealingly abut against a circumferential region of a rotating element, as a shaft, and that the ring element has two side legs projecting from the transverse leg between which sections of the seal rings extend and via which pressure is exerted on at least one of the seal rings to contact the sealing surfaces, in particular on the first seal ring, i.e. the rotor ring.

According to the invention, the pressure on the first seal ring, i.e. the rotor ring, in the direction of the second seal ring, i.e. the stator ring, is effected by the spring elasticity of the material of the ring element. This is used at the same time to ensure that the mechanical seal is fixed to the rotating element, such as the shaft, to the required extent.

The spring elastic ring element fulfills the object of the spring of the known mechanical seals.

The ring element combines the pressing together of the seal rings and the sealing contact with the shaft, thus ensuring that the passage of fluids is prevented.

The transverse leg is in sealing contact with the rotating element in such a way that, when the mechanical seal is fixed, the rotating element can be adjusted axially to the mechanical seal, e. g. by thermal expansion, and/or can oscillate relative to the mechanical seal.

Even if the outer side of the transverse leg is in sealing contact with the rotating element, the invention is not left if further or secondary seals, such as O-rings, should be provided on the outer side.

Nor is the invention left if the side leg associated with the outside of the stator ring does not bear directly against the outside of the stator ring, but if necessary a pressure means is arranged between the facing surfaces of the side leg and stator ring.

According to an embodiment, the ring element is designed in several parts, with a first part preferably consisting of the transverse leg and one of the side legs and the second part being the other side leg, preferably in form of a ring, such as a clamping ring, which is preferably designed to be insertable into the transverse leg.

Irrespective of this, it may be provided that the first side leg is supported relative to the first seal ring by at least one first sealing element, such as an O-ring, and/or that the transverse leg is supported relative to the rotating element by at least one second sealing element extending from the outside of the transverse leg.

In a further development, the invention provides that at least one spring element is arranged between the at least one first sealing element and/or the at least one second sealing element and the first side leg and the transverse leg, respectively.

It is also possible for the transverse leg to be made up of several parts, in particular two parts, and for the parts of the transverse leg to be connected via a spring element.

According to a further embodiment, it is provided that the mechanical seal is in sealing contact with the rotating element in such a way that the latter is axially displaceable and / or oscillating in relation to the mechanical seal.

In particular, the ring element is frictionally connected both to the first seal ring - hereinafter referred to as the rotor ring or seal ring - and to the second seal ring, also called as stator ring or mating ring.

It may be provided that the inner surface of the ring element bearing against the first seal ring has a tooth-like geometry, which is formed in particular by lips.

The material for the elastic material of the ring element is in particular rubber, such as nitrile rubber, especially carboxylated nitrile rubber.

Spring steel, rubber or plastic materials, e. g. Polyurethane (PU) or Polypropylene (PP), are spring-elastic materials that can form the basis of the ring element. It is essential that a force is exerted on the seal rings via the ring element in such a way that the sealing surfaces are in sealing contact with each other, while at the same time ensuring that the required seal is provided between the elements to be sealed, such as the housing and shaft.

If the base material of the ring element is an inherently rigid material, elements that generate the spring effect, in particular sealing elements, such as O-rings, emanate from at least one side leg to apply force to the seal rings. Corresponding sealing elements can also emanate from the outside of the transverse leg so that it is supported in a sealing manner on the elements to be sealed, such as the shaft or housing.

It is important that at least one side leg of the ring element is spring-elastic or has a spring-elastic area via which the required force is applied to the seal ring assigned to the side leg so that it can make sealing contact with the other seal ring.

In a further development, it is provided that the inner side of the second side leg of the ring element associated with the second seal ring has recesses for conducting lubricant, which extend in particular radially.

The rubber used for the ring element, in particular has a Shore A hardness between 40 and 90, in particular between 50 and 70.

Preferably, the radial extension of the second side leg facing the second seal ring, i.e. the stator ring, is smaller than the first side leg facing the first seal ring.

The ring element preferably has an asymmetrical U-geometry in section, whereby the thickness of the first side leg should be greater than the thickness of the second side leg, at least in sections.

Furthermore, the first side leg adjacent to the rotor ring should be chamfered at the head end and/or on the outside. The chamfer should run at a height that is above the transverse leg.

In particular, it is also provided that when the mechanical seal is installed, the ring element positively receives the first seal ring at least on the bottom side and in adjacent sections of the side walls. The bottom side is the area of the first seal ring that interacts with the transverse leg of the ring element.

Furthermore, the second seal ring is provided with its underside facing the transverse leg at a distance from the inner side of the transverse leg.

In order to generate the necessary tension so that the ring element is pressed with its transverse leg onto the rotating element and thus the sealing takes place, the inner diameter of the first seal ring is smaller than the diameter of the ring element in the inner side of the transverse leg in the assembled state of the ring element, in particular also in the relaxed state. This diameter can be referred as outer diameter of the transverse leg in the region where the first seal ring is contacting the transverse leg.

Alternatively or complementarily, the inner diameter of the ring element in the relaxed state is smaller than the outer diameter of the rotating element, such as shaft.

In particular, it is provided that the first side leg, which abuts against the outside of the first seal ring, is inclined in the direction of the second side leg when the ring element is in the relaxed state.

In its upper region in the relaxed state, the first side leg should have the geometry of a parallelogram, in particular an oblique parallelogram, with the side associated with the first seal ring enclosing an acute angle to the transverse leg.

It is further provided that inner diameter of the ring member is smaller than outer diameter of the rotating member, such as shaft, in the relaxed state of the ring member.

Also, the invention relates to a method for sealing a rotating component, such as shaft, against a stationary component, such as housing, by arranging a mechanical seal between the rotating component and the stationary component, characterized by using the mechanical seal of the type described above without means for fastening the first seal ring to the rotating component and/or the second seal ring to the stationary component. In particular, neither the first seal ring nor the second seal ring is fixed to one of the components by separate fixing means.

In particular, it is provided that the mechanical seal is in sealing contact with the rotating component in such a way that the latter is axially displaceable and / or oscillating in relation to the mechanical seal.

Further details, advantages and features of the invention result not only from the claims, the features to be taken from these - individually and/or in combination -, but also from the following description of preferred embodiments.
- Fig. 1: shows a schematic diagram of a first embodiment of a mechanical seal in the installed state,
- Fig. 2: shows an enlarged section of the mechanical seal according to Fig. 1,
- Fig. 3: shows the mechanical seal according to Figs. 1 and 2 in perspective view,
- Fig. 4: shows a side view of a ring element,
- Fig. 5: shows a section along line D-D in Fig. 4,
- Fig. 6: shows a second embodiment of a mechanical seal,
- Fig. 7: shows the ring element of Fig. 6 in the relaxed state,
- Fig. 8: shows the mechanical seal in perspective view in the direction of a first seal ring,
- Fig. 9: shows the mechanical seal in perspective view in the direction of a second seal ring and
- Fig. 10: shows a third embodiment of a mechanical seal in section.

On the basis of the figures, in which basically identical elements are provided with the same reference numbers, a mechanical seal (end-face mechanical seal) according to the invention is described, which can be used wherever mechanical seals are normally used.

The mechanical seal is a dynamic seal that seals a rotating component or element, such as a shaft, against a stationary component or element, such as a machine housing. The mechanical seal according to the invention offers the possibility of sealing without the need for special preparations on the components, such as shaft or machine housing. Regardless of this, the desired sealing is achieved.

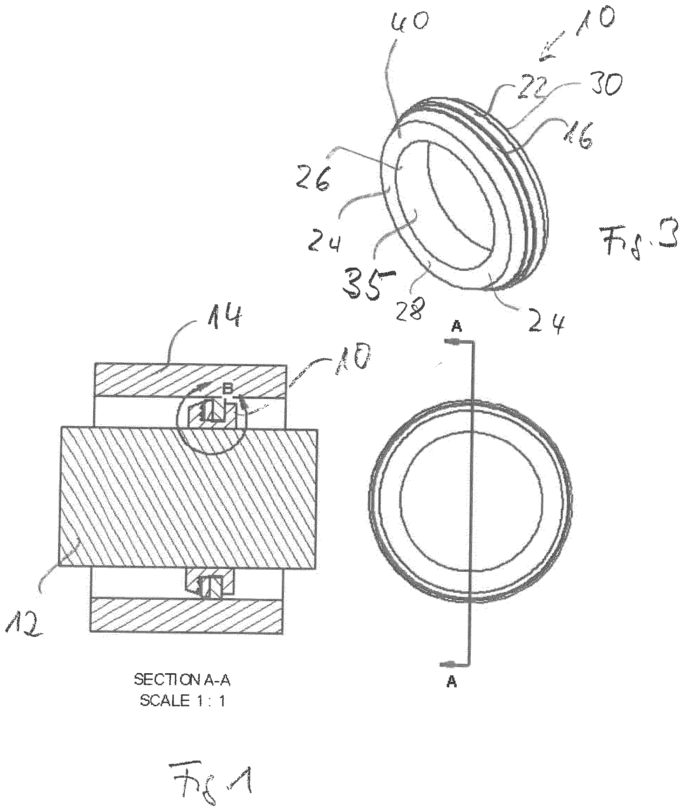

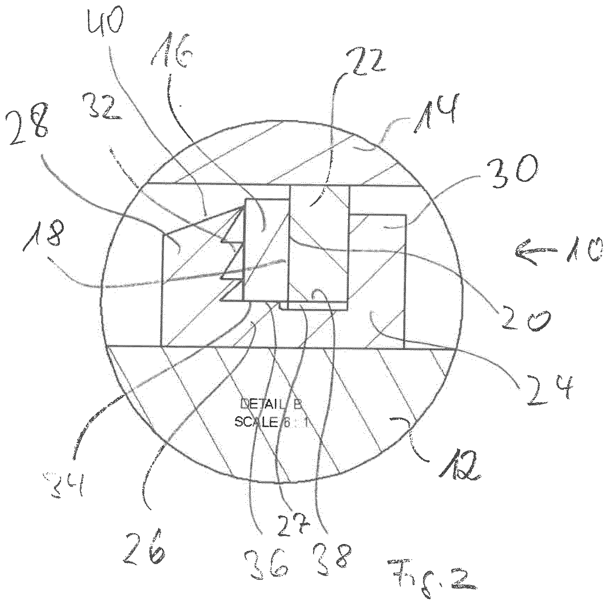

Fig. 1 shows a mechanical seal 10 according to the invention, which in the embodiment seals a shaft 12 as a rotating component against an opening in a machine housing 14 as a stationary component. The mechanical seal 10 is shown in enlarged form in Fig. 2. In the usual manner, the mechanical seal 10 has a first seal ring16 rotating with the shaft 12, which is hereinafter referred to as the rotor ring. The rotor ring 16 has a sealing surface 18 which rests on a sealing surface 20 of a second seal ring 22, which is arranged stationary in the opening of the housing 14, i.e. does not rotate with the shaft 12. The second seal ring 22 is referred to as the stator ring.

In order to arrange the mechanical seal 10 in a sealing manner between the shaft 12 and the housing 14 without additional fastening elements, the rotor ring 16 and the stator ring 22 are received by a ring element 24 having a U-shape in section, which fulfills the task of pressing the rotor ring and the stator ring 16, 22 against each other so that the sealing surfaces 18, 20 slide on each other.

The stator ring 22 is fixed in the opening of the housing 14, for example by clamping.

By means of the rotor ring 16, the ring element 24 is pressed against the shaft 12. This ensures the desired sealing while simultaneously fixing the mechanical seal 10 between the shaft 12 and housing 14.

Supplementally, pressure is applied to the rotor ring 16 via the ring member 24 when the inner diameter of the ring element 24 is less than the outer diameter of the rotating member 12.

The ring element 24 can be made of rubber, particularly nitrile rubber, preferably using carboxylated nitrile rubber.

The material should have a Shore A hardness of at least 60.

However, materials such as spring steel or ceramic can also be used for the ring element 24.

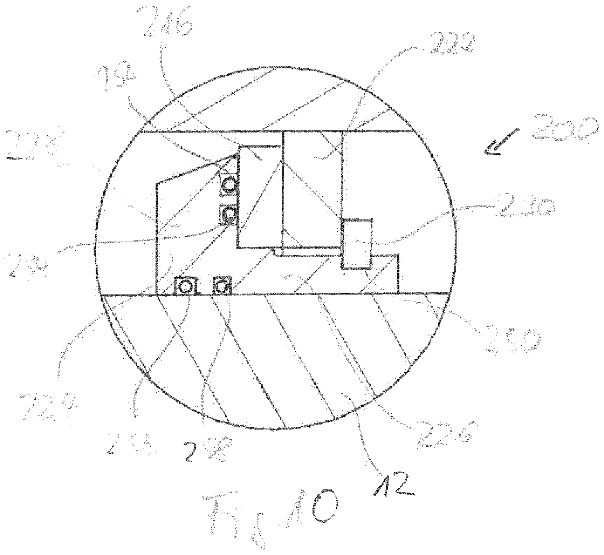

If a material that does not have spring-elastic properties, such as ceramic, is used as the base material of the ring element 24, the part of the ring element 24 - in the embodiment the side leg 28 as explained below - associated with the rotor ring 16 is supported relative to the latter via a spring-elastic element, such as a rubber seal, extending from the leg 28, in accordance with the explanations in connection with the embodiment of Fig. 10.

The materials of rotor ring 16 and stator ring 22 may be those of common seal ring materials, such as stainless steel, tungsten carbide, silicon carbide, chrome castings, ceramics, or other hard metals.

Also, it is not excluded that the seal rings 16, 22 are formed in the form of a hard-soft pairing or a hard-hard pairing with respect to their materials.

As can be seen from the drawing, the ring element 24, which produces the desired sealing, pressing and fixing effect, has a transverse leg 26 which lies in sealing contact with the shaft 12 and side legs 28, 30 which can also be described as flanges. The first side leg 28 is in contact with the outer surface of the rotor ring 16 and the second side leg 30 is in contact with the outer surface of the stator ring 22.

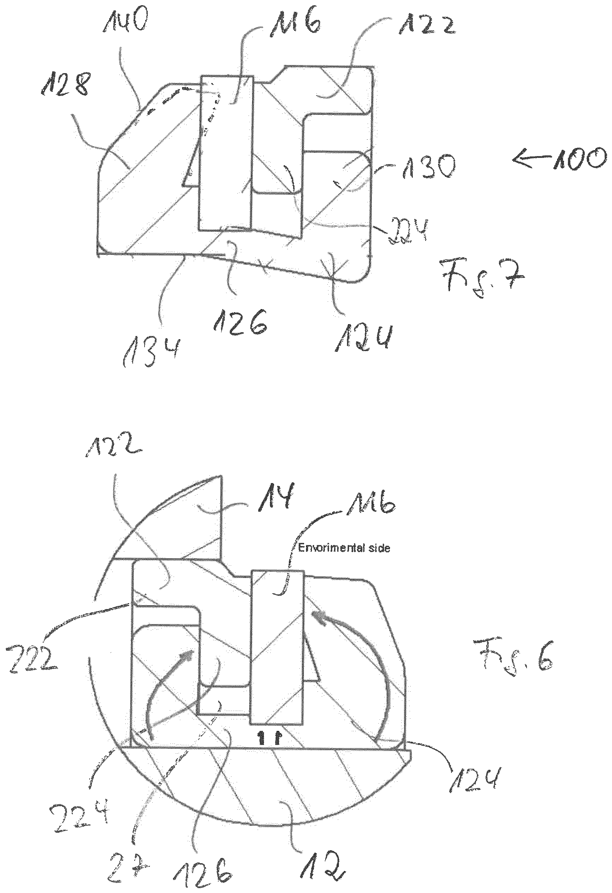

In accordance with the figures, the first side leg 28 has a sawtooth structure, formed for example by lips, in its inner surface 32 contacting the rotor ring 16 in order to ensure the required contact pressure. Also, the first side leg 28 is chamfered at the head end, whereby in the relaxed state the first side leg 28 extends inclined in the direction of the second side leg 30, as explained in connection with Fig. 7.

At least in the assembled state, and preferably also in the relaxed state, the ring element 24 has a diameter relative to the inner surface 34 of the transverse leg 26 which is greater than the inner diameter of the rotor ring 16 in its bottom surface 36. After insertion of the mechanical seal 10 into the opening of the housing 14, the rotor ring 16 exerts the necessary pressure on the transverse leg 26 to achieve the desired seal between the ring element 24, i.e. the surface facing the transverse leg 26, and the shaft 12. In this regard, in accordance with the embodiment of Fig. 6, it is possible for the rotor ring 16 to be connected, preferably form fittingly connected, with the ring element 24 both in the bottom region and in the adjacent side walls.

Bottom surface 36 of rotor ring 16 is the one that interacts with transverse leg 26.

The distance between the side legs 28, 30 in the relaxed state of the ring element 24 is likewise selected to be less than the distance between outer surfaces of the rotor ring 16 and stator ring 22 when they contact each other.

The section 40 of the first side leg 28 which is remote to the transverse leg 26 should be chamfered.

It can also be seen in Fig. 2 that a gap 27 extends between the inner side 38 of the stator ring 22 and the inner surface 34 of the transverse leg 26. Inner side 38 is the side facing the transverse leg 26, i.e. its inner surface 34.

It is further apparent from Fig. 2 that, where appropriate, the inner surface 34 of the transverse leg 26 may have a step, with the rotor ring 16 acting on the region of the inner surface 36 which has a larger diameter than the region in which the gap 27 extends.

Fig. 3 shows a perspective view of the mechanical seal 10. The ring element 24 can be seen with its outer surface 35 facing the component to be sealed, such as the shaft 12, and the head-side chamfer 40 of the first side leg 28, the rotor ring 16 as the first seal ring, the stator ring 22 as the second seal ring and the second side leg 30 of the ring element 24.

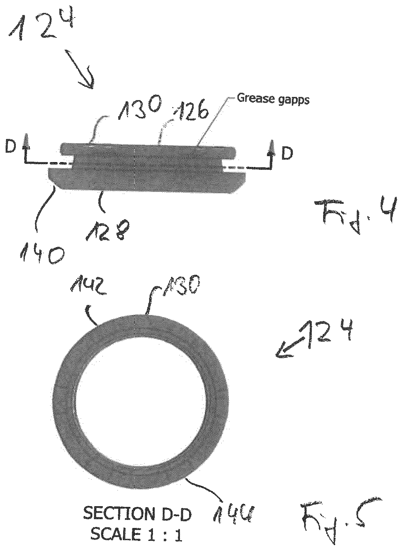

In Figs. 4 to 9, a further embodiment of a mechanical seal 100 is shown which corresponds to the teachings of the invention, i.e., the mechanical seal 100 can be arranged between the shaft 12 and the machine housing 14 or on other components to be sealed without any special preparations.

In the figures 4 to 9 the rotor ring is marked with the reference sign 116, the stator ring with the reference sign 122 and the ring element with the reference sign 124. The ring element 124 abuts the rotor ring 116 with its first side leg 128 and the stator ring 122 with its second side leg 130 to apply the required force to them to slidably support one another. The transverse leg 126 sealingly is supported on the shaft 12.

In the embodiment, the stator ring 122 has an L-shape in section, with a first leg 222 parallel to the longitudinal axis of the shaft 12 and a second leg 224 perpendicular thereto. Via the first leg 222, the mechanical seal 100 is fixed in a clamping manner in an opening. The rotor ring 116 is in contact with the second leg 224.

The first leg 222, which runs parallel to the longitudinal axis, is used for sealing against the housing. The outer surface 135 of the transverse leg 126 of the ring element 124 is used for sealing against the shaft 12.

In Fig. 6, arrows are drawn to symbolize the pressure effects of the ring element 126.

The rotor ring 116 also exerts the necessary pressure on the transverse leg 126 to seal the shaft 12.

Fig. 7 shows in dashed lines how the first side leg 128 extends in the relaxed state, if the rotor ring 116 and stator ring 122 are not arranged between the side legs 128, 130. In the relaxed state, the transverse leg 126 has an inclined course compared to the installed state. During installation, the second side leg 130 is adjusted in the direction of the housing 14 to be sealed, as can be seen from a comparison of Figs. 6 and 7. At the same time, the spring-elastic property of the side leg 128 builds up the necessary pressure acts on the outer surface of the rotor ring 116 to press the rotor ring 1 16 against the second leg 224 of the stator ring 122.

It can also be seen from the sectional view of Fig. 6 that, in the installed state, the rotor ring 116 in its base region is positively connected with the transverse leg 126 of the ring element 124 extending on the shaft side.

The ring element 124, which can also be described as a pressure element, is shown in side view and in cross section in Figs. 4 and 5. It can be seen that the first side leg 128 is chamfered on the outside, as is also illustrated in Figs. by the surface 140. The upper section of the first side leg 128, which runs above the transverse leg 126, has a non-equilateral trapezoidal geometry and is inclined in the direction of the second side leg 130. By inserting the rotor and stator rings 116, 122, the first side leg 128 is adjusted outward, as a comparison of the leg representations in Fig. 7 (dashed representation, solid representation) illustrates. Thereby the necessary pressure is built up in direction of the rotor ring 116.

The radial extent of the first side leg 128 is greater than that of the second side leg 130, which abuts the outside of the stator ring 122, specifically its leg 224 extending perpendicular to the longitudinal axis of the shaft. In Fig. 4, the transverse leg 126 can also be seen.

The sectional view in Fig. 5 illustrates that the second side leg 130 has radially extending recesses on its inner side, two of which are exemplarily marked with the reference numbers 142 and 144, through which a lubricant enters the inner region of the mechanical seal 110.

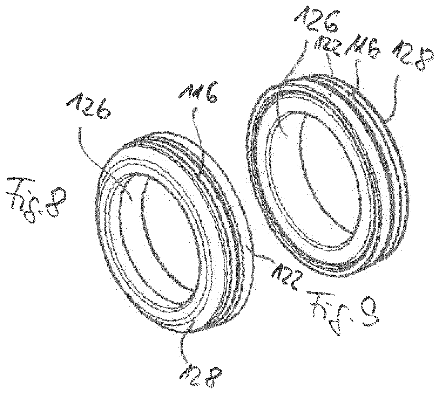

Figs. 8 and 9 are intended to illustrate the mechanical seal 100 once again in perspective, viewed once from the rotor ring side (Fig. 8) and once from the stator ring side (Fig. 9).

Suitable materials for the ring element are spring-elastic materials that allow the first and second seal rings, i.e. the rotor and stator rings, to be pressed together to the required extent, while at the same time providing the necessary seal to the rotating component, such as the shaft. In particular, a rubber is suitable, preferably nitrile rubber, especially carboxylated nitrile rubber. The Shore A hardness should be between 40 and 90 lie.

However, the ring element can also be made of steel or ceramic or plastic, which would then be the base material. A spring-elastic material emanates from this, which is supported on the rotor ring in order to introduce the force required for clamping fixation.

Fig. 10 shows a sectional view of an embodiment of a mechanical seal 200 which, in accordance with the teaching of the invention, has an ring element 224 which is U-shaped in section and via the side legs 228, 230 of which the required force acts on the rotor ring 216 and the stator ring 222 so that they can slide against each other in a sealing manner.

The ring element 224 is formed in two parts and consists of an L-shaped section comprising the transverse leg 226 and the side leg 228 supported on the rotor ring 216. The side leg 230 supporting the stator ring 222 can be, for example, a snap ring which is inserted into a groove 250 formed in the transverse leg 226.

The base material of the L-shaped section can be, for example, spring steel or a spring-elastic plastic, via which the required pressure is applied directly to the rotor ring 216 in the direction of the stator ring 222 and the right-hand side leg 230.

The spring-elastic effect can additionally be reinforced or generated by at least one elastic element like a seal, such as O-rings 252, 254, embedded in the side leg 228, if the base material of the L-shaped section of the ring element 224 should not have the required spring-elastic property.

Accordingly, seals, such as O-rings 256, 258, can extend from the inner side of the side leg 226 so that the transverse leg 226 can be sealingly supported on the shaft.

The previously described examples of mechanical seals offer the advantage that they can be mounted both on a rotating component, such as a shaft, and on a stationary component, such as a housing, without additional fastening or clamping elements. Special mounts are not required.

Furthermore, the ring element allows the rotating component, such as the shaft, to move axially in relation to the mechanical seal due to thermal expansion, for example. Pendulum movements of the rotating component are also easily absorbed.

The materials of rotor and stator ring can be selected according to those used for common mechanical seals, in particular stainless steel, chromium cast, silicon carbide, aluminum oxide, tungsten carbide or other ceramics or hard metals.

The teaching according to the invention also includes a mechanical seal in which, in the embodiment example, the seal ring designated as the second seal ring 422, 122, 222 is fixed directly on the shaft 12, i.e. forms the rotating seal ring. Accordingly, the U-shaped ring element 24, 124, 224 is fixed with the further seal ring 16, 116, 216 in the opening of a component in the machine housing. The transverse leg 26, 126, 226 would then be supported in a fixed position in the opening.

Thus, a corresponding mechanical seal comprising a rotating first seal ring with a first sealing surface and a stationary second seal ring with a second sealing surface and a pressure means acting on the seal rings for compressing the seal rings and contacting the sealing surfaces is characterized in that the pressure means is a ring element consisting of or containing a spring-elastic material at least in some areas, in that the ring element has a transverse leg which is designed to bear sealingly against a stationary component, such as a housing opening, and in that the ring element has two side legs which extend from the transverse leg and between which sections of the seal rings extend and via which a pressure is exerted on the seal rings to contact the sealing surfaces, and in that the first seal ring bears sealingly against the circumferential surface of a rotating component.

The embodiments of the mechanical seal result in corresponding modifications from the previously explained embodiments and correspondingly modified features of the claims.

## Claims

1. A mechanical seal (10, 100, 200) comprising a rotating first seal ring (16, 116, 216) having a first sealing surface (18) and a stationary second seal ring (22, 122, 222) having a second sealing surface (20), and pressure means (24, 124, 224) acting on the seal rings to compress the seal rings and contact the sealing surfaces,
**characterized in that**
the pressure means is a ring element (24, 124, 224) consisting of or containing a spring-elastic material at least in certain regions, **in that** the ring element has a transverse leg (26, 126, 226) which is formed to sealingly abut against circumferential surface of a rotating element (12), and **in that** the ring element has two side legs (28, 30, 128, 130, 228, 230) extending from the transverse leg between which portions of the seal rings (16, 22, 116, 122, 216, 222) extend and via which a pressure is exerted on at least one of the seal rings for contacting the sealing surfaces (18, 20).

2. The mechanical seal according to claim 1,
**characterized in that**
the ring element (24, 124, 224) has a U-shaped geometry in the cross-section extending perpendicularly to a plane spanned by the ring element.

3. The mechanical seal according to claim 1 or 2,
**characterized in that**
with the mechanical seal (10, 100, 200) arranged on the rotating element (12), such as the shaft (12), the transverse leg (26, 126, 226) of the ring element (24, 124, 224) is connected to the rotating element in a sealing manner in such a way that a relative movement in the longitudinal direction of the rotating element and/or an oscillating movement of the rotating element is possible.

4. The mechanical seal according to at least one of the preceding claims,
**characterized in that**
the ring element (24, 124, 224) consists of or contains rubber, such as nitrile rubber, in particular carboxylated nitrile rubber, spring steel, metal, ceramic, plastic.

5. The mechanical seal according to at least one of the preceding claims,
**characterized in that**
the rubber has a Shore A hardness between 40 and 90, in particular between 50 and 70, preferably 60.

6. The mechanical seal according to at least one of the preceding claims,
**characterized in that**
the inner side of the second side leg (130) abutting the second seal ring (122) has radially extending recesses (142, 144) for guiding lubricant.

7. The mechanical seal according to at least one of the preceding claims,
**characterized in that**
the side legs (28, 30, 128, 130, 228, 230) have radial extensions differing from one another, in particular the length of the second side leg (30, 130, 230) contacting the second seal ring (22, 122, 222) is shorter than the length of the first side leg (28, 128, 228) contacting the first seal ring (16, 116, 216), and / or that the first side leg (28, 128, 228) has a greater thickness than the second side leg (30, 130, 230), at least in sections.

8. The mechanical seal according to at least one of the preceding claims,
**characterized in that**
the first side leg (28, 128), which contacts the first seal ring (16, 116), has a structure, in particular a tooth-shaped geometry, in its side facing the first seal ring.

9. The mechanical seal according to at least one of the preceding claims,
**characterized in that**
the outer diameter of the transverse leg (26, 126, 226) of the ring element (24, 124, 224) in its relaxed state is greater than the inner diameter of the first seal ring (16, 116,216).

10. The mechanical seal according to at least one of the preceding claims,
**characterized in that**
the first side leg (28, 128) has, in its region remote from the transverse leg (126), a trapezoidal geometry in section, in particular a non-equilateral trapezoidal geometry, which runs inclined in the direction of the second side leg (30, 130).

11. The mechanical seal according to at least one of the preceding claims,
**characterized in that**
the first seal ring (16, 116, 216) is positively received by the transverse leg (26, 126, 226) at least in the base region and adjacent side wall region in the operational position of the mechanical seal (10, 100, 200), and/or that the second seal ring (22, 122, 222) extends with its surface facing the transverse leg (26, 126, 226) at a distance from the transverse leg.

12. A method of sealing a rotating component (12), such as a shaft, against a stationary component (14), such as a housing, by arranging a mechanical seal (10, 100, 200) between the rotating component and the stationary component or an opening through which the rotating component passes,
**characterized by**
use of the mechanical seal (10, 100, 200) according to at least one of the preceding claims without means for fixing the first seal ring (16, 116, 216) to the rotating component (12) and/or the second seal ring (22, 122, 222) to the stationary component (14), in particular without means for fixing both the first seal ring and the second seal ring.

13. The method according to claim 12,
**characterzed in that**
the mechanical seal (10, 100, 200) is in sealing contact with the rotating component (12) in such a way that the latter is axially displaceable and / or oscillating relative to the mechanical seal.
